# EUROPÄISCHE PATENTSCHRIFT

(11) **EP 3 314 295 B1**
(45) Veröffentlichungstag und Bekanntmachung des Hinweises auf die Patenterteilung: **09.12.2020**
(21) Anmeldenummer: 16718329.2
(22) Anmeldetag: 22.04.2016
(51) Int. Cl.: G01S 15/931, G01S 7/52, G01S 7/521, H04R 17/00

(54) **VERFAHREN ZUM BEHEIZEN EINES ULTRASCHALLWANDLERS UND ULTRASCHALLWANDLER**
METHOD FOR HEATING AN ULTRASONIC TRANSDUCER AND ULTRASONIC TRANSDUCER
PROCÉDÉ POUR CHAUFFER UN TRANSDUCTEUR ULTRASONORE ET TRANSDUCTEUR ULTRASONORE

(30) Priorität: 24.06.2015 DE 102015211710
(43) Veröffentlichungstag der Anmeldung: 02.05.2018
(73) Patentinhaber: Robert Bosch GmbH, 70442 Stuttgart (DE)
(72) Erfinder: TREPTOW, Thomas, 71229 Leonberg (DE); SCHUMANN, Michael, 70597 Stuttgart (DE); SCHERWATH, Bernd, 71229 Leonberg (DE)
(86) Internationale Anmeldenummer: PCT/EP2016/058956
(87) Internationale Veröffentlichungsnummer: WO 2016/206828

(56) Entgegenhaltungen:
- DE-A1-102010 028 009
- DE-A1-102011 115 823
- DE-A1-102013 211 419

## Beschreibung

### Stand der Technik

Die Erfindung betrifft ein Verfahren zum Beheizen eines Ultraschallwandlers nach dem Oberbegriff des Anspruchs 1. Ferner betrifft die Erfindung einen Ultraschallwandler, der nach einem erfindungsgemäßen Verfahren betrieben werden kann.

Ein Ultraschallwandler nach dem Oberbegriff des Anspruchs 1 ist aus der DE 10 2005 045 019 A1 der Anmelderin bekannt. Der bekannte Ultraschallwandler dient, üblicherweise zusammen mit mehreren, im Bereich eines Stoßfängers eines Kraftfahrzeugs angeordneten Ultraschallwandlern dazu, Objekte, die vor bzw. hinter dem Kraftfahrzeug angeordnet sind, zu erfassen. Insbesondere sind derartige Ultraschallwandler Bestandteil eines Fahrerassistenzsystems, bei dem beispielsweise ein Einparkvorgang für den Fahrer unterstützt wird. Der ordnungsgemäße Betrieb derartiger Ultraschallwandler setzt voraus, dass insbesondere bei Temperaturen unterhalb des Gefrierpunkts das zur Aussendung bzw. zum Empfang von Schallimpulsen dienende Membranelement frei von Eis ist. Hierzu ist es aus der eingangs genannten Schrift bekannt, innerhalb des Innenraums des Ultraschallwandlers ein durch ein zusätzliches Bauteil gebildetes Heizelement anzuordnen, mit dem der Innenraum des Ultraschallwandlers aufgeheizt wird. Durch Wärmeabstrahlung des Heizelements wird auch das Membranelement erwärmt, so dass ggf. vorhandenes Eis abschmelzen kann. Dadurch, dass das Heizelement ein zusätzliches Bauteil darstellt, wird zum einen der benötigte Bauraum für den Ultraschallwandler vergrößert, und zum anderen sind die Herstellkosten gegenüber einem Ultraschallwandler, der keine derartige Heizelemente aufweist, erhöht.

Weiterhin ist es aus der DE 30 13 060 A1 bekannt, Freilandleitungen, wie sie der Stromführung zur Überbrückung großer Distanzen dienen, derart zu betreiben, dass durch Verschiebung eines Blindstroms erhöhte ohmsche Verluste und somit eine erhöhte Erwärmung der Freilandleitung auftritt, welche zum Abtauen von Eisansatz bei der Freilandleitung führt. Es wird somit bei der zuletzt genannten Schrift das unmittelbar von dem Eisansatz bedrohte Bauteil (Freilandleitung) selbst durch einen Betrieb mit erhöhten ohmschen Verlusten erwärmt.

Aus der DE 10 2013 2011 419 A1 ist es bekannt, bei einem Ultraschallsensor einen zusätzlichen Heizmodus vorzusehen, der sich von dem normalen Betriebsmodus unterscheidet. Bei dem Heizmodus wird die Membran des Ultraschallwandlers länger zu Schwingungen angeregt, als dies während des normalen Betriebsmodus der Fall ist. Auch kann die Totzeit zwischen zwei Schwingungsphasen der Membran verkürzt werden. Die gegenüber dem normalen Betriebsmodus andere Schwingungsanregung führt zu einer verlängerten hochfrequenten Schwingung der Membran und bewirkt durch die erhöhte mechanische Arbeit eine Erwärmung des Membranelements.

Aus der DE 10 2011 115 823 A1 ist es darüber hinaus bekannt, eine elektrische Komponente eines Kraftfahrzeugs mit einer erhöhten Verlustleistung zu betreiben, um eine Erwärmung beispielsweise von Kühlmittel durch erhöhte Wärmeabstrahlung zu begünstigen.

Zuletzt ist es aus der DE 10 2010 028 009 A1 bekannt, bei einem Ultraschallwandler eine Impedanzmessung durchzuführen, um in Abhängigkeit des Resultats einen Heizvorgang auszulösen.

### Offenbarung der Erfindung

Ausgehend von dem dargestellten Stand der Technik liegt der Erfindung die Aufgabe zugrunde, ein Verfahren zum Beheizen eines Ultraschallwandlers nach dem Oberbegriff des Anspruchs 1 derart weiterzubilden, dass der vorrichtungstechnische Aufwand zur Herstellung des Ultraschallwandlers verringert wird. Insbesondere soll es ermöglicht werden, ohne zusätzliche bzw. separate Bauteile, welche dem Beheizen des Ultraschallwandlers dienen, eine hinreichend hohe Erwärmung des Ultraschallwandlers zu ermöglichen. Darüber hinaus ist es Aufgabe der Erfindung, durch den Verzicht auf zusätzlich Bauteile zum Beheizen einen möglichst kompakt bauenden Ultraschallwandler zu ermöglichen.

Diese Aufgabe wird erfindungsgemäß bei einem Verfahren zum Beheizen eines Ultraschallwandlers mit den kennzeichnenden Merkmalen des Anspruchs 1 dadurch gelöst, dass die Erwärmung durch ein Bauteil erzielt wird, das in einem ersten Betriebsmodus dazu dient, einen Sende- und/oder Empfangsbetrieb des Ultraschallwandlers auszuführen und in einem zweiten Betriebsmodus derart betrieben wird, dass das Bauteil eine gegenüber dem ersten Betriebsmodus erhöhte elektrische Verlustleistung aufweist.

Mit anderen Worten gesagt bedeutet dies, dass es erfindungsgemäß nicht vorgesehen sein muss, zusätzliche Bauteile, die speziell für die Erwärmung des Ultraschallwandlers ausgelegt/vorgesehen sind, zu verwenden. Vielmehr ist es gemäß der Erfindung vorgesehen, dass diejenigen Bauteile, die ansonsten während des Normalbetriebs (erster Betriebsmodus) zum Senden bzw. Empfangen von Ultraschallsignalen dienen, in einem zweiten Betriebsmodus dazu genutzt werden, den Innenraum des Ultraschallwandlers zu erwärmen. Die Erwärmung des Innenraums des Ultraschallwandlers bewirkt durch Wärmestrahlung eine Erwärmung des Membranelements und somit bei genügend großer Erwärmung auch ein Abtauen von ggf. an der Außenseite des Membranelements anhaftendem Eisbelag. Dadurch, dass keine zusätzlichen Bauteile zur Erwärmung des Innenraums des Ultraschallwandlers verwendet werden müssen, ermöglicht es das erfindungsgemäße Verfahren, einen besonders kompakt aufbauenden Ultraschallwandler auszubilden, der insbesondere gegenüber herkömmlichen Ultraschallwandlern keinen erhöhten Einbauraum benötigt. Darüber hinaus ermöglicht es das erfindungsgemäße Verfahren dadurch, dass der benötigte zweite Betriebsmodus durch eine entsprechende Ansteuerung der Bauteile, d.h. rein softwaremäßig, erfolgt, dass auch die Herstellkosten eines erfindungsgemäßen Ultraschallwandlers gegenüber dem Stand der Technik üblicherweise nicht erhöht sind.

Vorteilhafte Weiterbildungen des erfindungsgemäßen Verfahrens zum Beheizen eines Ultraschallwandlers sind in den Unteransprüchen aufgeführt.

Die grundsätzliche Idee, die zur Erwärmung bzw. zu erhöhten elektrischen Verlustleistungen des Bauteils führt, liegt darin, das betreffende Bauteil in dem zweiten Betriebsmodus in einem Betriebspunkt bzw. einem Zustand zu betreiben, bei dem das Bauteil einen geringeren Wirkungsgrad aufweist. Der geringere Wirkungsgrad hat die zur Abstrahlung der Wärme erforderliche erhöhte Verlustleistung zur Folge. Zur Erzielung einer derartigen erhöhten Verlustleistung ist es vorgesehen, dass der zweite Betriebsmodus ein Aussenden von gegenüber dem ersten Betriebsmodus eine höhere Frequenz aufweisenden Sendepulsen eines Piezoelements umfasst. Daher ist es besonders bevorzugt vorgesehen, im zweiten Betriebsmodus die Sendepulse mit einer erhöhten Frequenz zu betreiben, da dadurch die Sendepulse jeweils eine relativ geringe Dauer aufweisen können.

Weiterhin ist es vorgesehen, dass der zweite Betriebsmodus ein Aussenden von Sendepulsen eines Piezoelements außerhalb der Resonanzfrequenz des Membranelements und/oder des Piezoelements umfasst. Hintergrund hierfür ist, dass der Wirkungsgrad des Ultraschallwandlers in den außerhalb der Resonanzfrequenz liegenden Bereichen geringer ist, und die eingebrachte Leistung dadurch vermehrt in Wärme umgewandelt wird.

Weiterhin wird erwähnt, dass die angesprochene Resonanzfrequenz abhängig von dem auf dem Membranelement vorhandenen (Eis-)Belag und auch vom Ultraschallwandler bzw. dem Membranelement selbst ist. Daher ist es in Weiterbildung des zuletzt genannten Vorschlags bevorzugt vorgesehen, dass zur Festlegung der Frequenz für die Sendepulse vorab eine Impedanzmessung an dem Membranelement durchgeführt wird. Dazu werden Frequenzbereiche mit hoher Impedanz aus der Impedanzkurve (Impedanz über der Frequenz) ermittelt.

Der zweite Betriebsmodus umfasst einen Betrieb eines Rechnerkerns eines Mikrocontrollers, der zu einer erhöhten Auslastung des Rechnerkerns führt. Die stärkere Auslastung des Rechnerkerns führt zu einer erhöhten Stromaufnahme im Empfangsteil und damit zu einer Erhöhung der Chiptemperatur. Eine derartige erhöhte Auslastung des Rechnerkerns lässt sich beispielsweise durch eine speicher- und rechenintensive Rechenvorschrift realisieren, die durch einen Sonderbefehl gestartet wird. Der Programmcode der Rechnervorschrift kann dabei sehr klein gehalten werden, wenn dieser in einer Schleife ausgeführt wird. Auch ein spezieller Betrieb eines ASICs kann zu einer erhöhten Bauteiletemperatur führen.

Aus Gründen der Zuverlässigkeit des Schallwandlers, ist es wünschenswert, eine Bauteilüberlastung zu vermeiden. Daher umfasst eine weitere vorteilhafte Ausgestaltung des Verfahrens, dass die Bauteiltemperatur des an dem zweiten Betriebsmodus beteiligten Mikrocontroller überwacht wird und der zweite Betriebsmodus nur unterhalb einer Temperaturschwelle ausgeführt wird, wobei die Temperaturschwelle derart festgelegt wird, dass eine Schädigung oder Vorschädigung der im zweiten Betriebsmodus betriebenen Bauteile ausgeschlossen wird.

Insbesondere für den Fall, dass die Temperatur um den Gefrierpunkt beträgt und somit bei weiterem Absinken der Temperatur die Gefahr der Vereisung des Ultraschallwandlers an dem Membranelement besteht, kann es vorgesehen sein, dass der zweite Betriebsmodus mit dem ersten Betriebsmodus abwechselt.

Dadurch ist zum einen der Betrieb des Ultraschallwandlers zumindest zeitweise gewährleistet und andererseits wird bei fallenden Temperaturen eine Vereisung des Membranelements vermieden.

Um zu erkennen, ob die Erwärmung des Schallwandlers zu dem gewünschten Resultat bzw. dem Abschmelzen von Belägen auf dem Membranelement geführt hat, ist es darüber hinaus vorgesehen, dass der zweite Betriebsmodus in Abhängigkeit des Ergebnisses einer Impedanzmessung des Membranelements gesteuert wird. Mit anderen Worten gesagt bedeutet dies, dass die Impedanzmessung beispielsweise in gleichmäßigen Zeitabständen durchgeführt wird, und aus den Ergebnissen der Impedanzmessung auf das Vorhandensein von Belegen auf dem Membranelement geschlossen wird.

Die Erfindung umfasst auch einen Ultraschallwandler mit einem Membranelement, das mittels eines Piezoelements zu Schwingungen anregbar ist sowie elektronische Bauteile wie einem einen Rechnerkern aufweisenden Mikrocontroller und einer Sendeendstufe zur Ansteuerung des Piezoelements, wobei die elektronischen Bauteile dazu ausgebildet sind, den Ultraschallwandler nach dem erfindungsgemäßen Verfahren zu betreiben. Ein derartiger Ultraschallwandler weist dieselben Vorteile auf, wie diese bei den soweit beschriebenen erfindungsgemäßen Verfahren vorhanden sind.

In einer bevorzugten Weiterbildung eines soweit beschriebenen Ultraschallwandlers ist es vorgesehen, dass Mittel zur Erfassung der Bauteiletemperatur der elektronischen Bauteile vorgesehen sind, um eine Beschädigung der im zweiten Betriebsmodus betriebenen Bauteile zu vermeiden.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen stark vereinfachten Längsschnitt durch einen Schallwandler, der mittels eines erfindungsgemäßen Verfahrens betrieben werden kann,
- Fig. 2: ein Diagramm mit einer Darstellung der Impedanz über der Frequenz und
- Fig. 3: ein Blockdiagramm zur Erläuterung des erfindungsgemäßen Betriebs des Schallwandlers.

Gleiche Elemente bzw. Elemente mit gleicher Funktion sind in den Figuren mit den gleichen Bezugsziffern versehen.

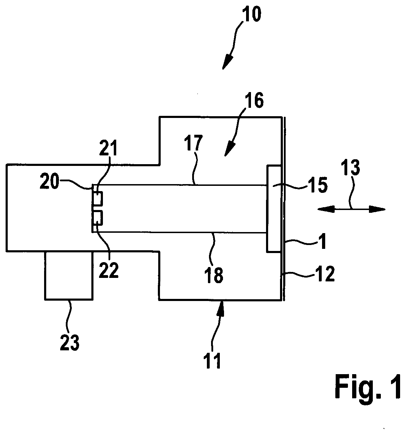

In der Fig. 1 ist stark vereinfacht ein Ultraschallwandler 10 dargestellt, wie er insbesondere als Bestandteil eines Fahrerassistenzsystems in einem Kraftfahrzeug verwendet wird. Dabei sind üblicherweise mehrere Ultraschallwandler 10 seitlich nebeneinander in entsprechenden Einbauöffnungen eines Stoßfängers eingebaut. Hinsichtlich eines derartigen Einbaus eines Ultraschallwandlers 10 in den Stoßfänger eines Kraftfahrzeugs wird, da an sich bekannt und nicht erfindungswesentlich, auf die DE 10 2005 045 019 A1 der Anmelderin verwiesen.

Der Ultraschallwandler 10 weist ein üblicherweise aus mehreren Bauteilen bestehendes Wandlergehäuse 11 auf, das im Bereich einer Stirnseite des Ultraschallwandlers 10 ein Membranelement 12 ausbildet. Das Wandlergehäuse 10 und insbesondere das Membranelement 12 bestehen üblicherweise aus Metall, beispielsweise aus Aluminium, und sind zumindest teilweise im Tiefziehverfahren hergestellt. Das Membranelement 12 ist dazu ausgebildet, in Richtung des Doppelpfeils 13, der senkrecht zur Membranebene verläuft, Schwingungen auszusenden und zu empfangen. Dieser Betriebszustand stellt einen ersten Betriebsmodus des Ultraschallwandlers 10 dar. Die Schwingungsfähigkeit betrifft sowohl das Aussenden von im Ultraschallbereich liegenden Schallwellen als auch die Anregung des Membranelements 12 durch auf das Membranelement 12 von außen wirkende, im Ultraschallbereich liegenden Schallwellen. Beim Betrieb des Ultraschallwandlers 10 wird dieser derart betrieben, dass abwechselnd Schallimpulse innerhalb eines bestimmten Zeitfensters ausgestrahlt werden und anschließend während einer Wartepause Schallwellen empfangen werden können, um aus der Zeitdauer zwischen den ausgesendeten und empfangenen Schallwellen auf eine Distanz eines Objekts zum Ultraschallwandler 10 zu schließen.

Sowohl zum Erzeugen derartiger Schwingungen bzw. Schallwellen, als auch zum Empfangen derselben ist das Membranelement 12 in Wirkverbindung mit einem Piezoelement 15 angeordnet. Das Piezoelement 15 ist im Innenraum 16 des Wandlergehäuses 11 angeordnet und vorzugsweise über eine nicht dargestellte Klebeverbindung mit der dem Innenraum 16 zugewandten Seite des Membranelements 12 verbunden. Über elektrische Anschlussleitungen 17, 18 ist das Piezoelement 15 mit einem Schaltungsträger 20, üblicherweise in Form einer Leiterplatte, verbunden. Auch der Schaltungsträger 20 befindet sich im Innenraum 16 des Wandlergehäuses 11. Auf dem Schaltungsträger 20 sind elektronische Bauteile 21, 22 angeordnet, wobei die elektronischen Bauteile 21, 22 beispielhaft, und nicht einschränkend, einen Mikrocontroller, einen ASIC (applikationsspezifisches integriertes Schaltungsbauteil), Sende- bzw. Empfangsendstufen sowie Elemente zur Erfassung von Bauteiletemperaturen, wie Wärmesensoren, umfassen. Der soweit beschriebene Ultraschallwandler 10 ist über einen Steckeranschluss 23 elektrisch kontaktierbar.

Bei Temperaturen unterhalb des Gefrierpunkts besteht die Gefahr, dass an der Außenseite des Membranelements 12 auf der dem Innenraum 16 abgewandten Seite ein Belag 1, insbesondere in Form einer Vereisung, auftritt. Ein derartiger Belag 1 verändert das Resonanzverhalten sowohl des Membranelements 12 als auch des mit dem Membranelement 12 gekoppelten Piezoelements 15. Zur Feststellung, ob ein Belag 1 auf dem Membranelement 12 vorhanden ist, ist es vorgesehen, entsprechend der Darstellung der Fig. 2 das Piezoelement 15 mit unterschiedlichen Frequenzen f anzusteuern und gleichzeitig die Impedanz I zu messen. Der in der Fig. 2 dargestellte Kurvenverlauf zeigt, dass in dem Punkt A eine relativ geringe Impedanz I vorhanden ist, während in den Punkten B die Impedanz I lokale Maxima aufweist. Der Punkt A kennzeichnet den Betriebspunkt des Membranelements 12, bei dem dieses in Resonanzfrequenz ist. Bei einer derartigen Resonanzfrequenz ist die zur Erzeugung von Schwingungen bzw. Wellen erforderliche Energie relativ gering. Demgegenüber ist in den Punkten B bzw. den entsprechenden Frequenzen f, bedingt durch die relativ hohe Impedanz, ein geringer Wirkungsgrad vorhanden. Das bedeutet, dass bei einer Ansteuerung des Membranelements 12 durch das Piezoelement 15 im Bereich der Frequenzen f der Punkte B in einem zweiten Betriebsmodus die Energie mit einem relativ hohen Anteil in Verlustwärme umgesetzt wird. Eine derartige erhöhte Verlustwärme führt zu einer Erwärmung des Innenraums 16 des Wandlergehäuses 11 und damit auch zu einem Abschmelzen des Belags 1.

Die Erhöhung der Temperatur innerhalb des Wandlergehäuses 11 in einem zweiten Betriebsmodus kann auch dadurch bewirkt werden, dass die elektronische Bauteile 21, 22 in dem zweiten Betriebsmodus derart betrieben werden, dass erhöhte Verlustleistungen auftreten.

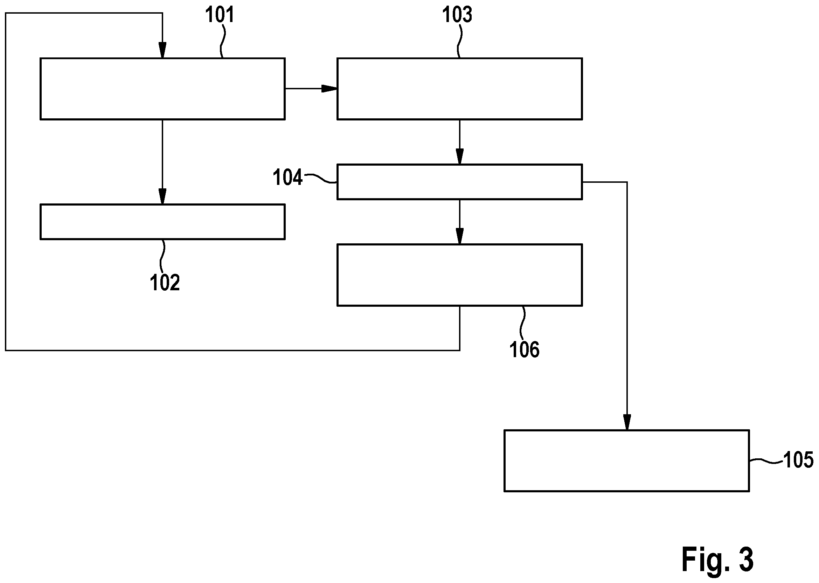

In der Fig. 3 ist das erfindungsgemäße Betriebsverfahren für den Ultraschallwandler 10 dargestellt: In einem ersten Schritt 101 erfolgt eine Prüfung des Membranelements 12 auf den Belag 1 mittels der angesprochenen Impedanzmessung gemäß der Fig. 2. Ergibt die Impedanzmessung, dass die Frequenz f, bei der die geringste Impedanz I auftritt, bei einer Frequenz f liegt, die typischerweise ohne Beläge 1 vorhanden ist, so wird daraus geschlossen, dass kein Belag 1 an dem Membranelement 11 vorhanden ist. Daraufhin wird der Ultraschallwandler 10 in einem zweiten Schritt 102 in dem ersten Betriebsmodus betrieben, der dem normalen Messbetrieb entspricht.

Ergibt die Messung demgegenüber das Vorhandensein eines Belags 1, so wird entsprechend des Schritts 103 der normale Messbetrieb, d.h. der erste Betriebsmodus des Ultraschallwandlers 10 verlassen. Anschließend erfolgt in einem Schritt 104 eine Temperaturmessung der Umgebung, welche beispielsweise durch einen üblicherweise in einem Kraftfahrzeug vorhandenen Temperatursensor erfolgt. Ergibt die Messung, dass die Temperatur mehr als 0°C beträgt, so wird entsprechend des Schritts 105 daraus geschlossen, dass der Ultraschallwandler 10 einen Defekt aufweist. Dies ergibt sich daraus, dass beim Vorhandensein einer Temperatur von mehr als 0°C üblicherweise kein Belag 1 vorhanden sein kann. Entsprechende Warnhinweise können an einen Bediener bzw. Fahrer ausgegeben werden, damit dieser darüber informiert ist, dass der Ultraschallwandler 10 nicht zur Verfügung steht.

Ist hingegen die Temperatur der Umgebung geringer als 0°C, so wird der Ultraschallwandler 10 entsprechend des Schritts 106 in dem zweiten Betriebsmodus betrieben, der die angesprochene Erwärmung des Innenraums 16 des Wandlergehäuses 11 bewirkt. Zur Überprüfung der Wirksamkeit der Maßnahmen des zweiten Betriebsmodus erfolgt anschließend wiederum entsprechend des ersten Schritts 101 eine Prüfung auf einen vorhandenen Belag 1.

## Patentansprüche

1. Verfahren zum Beheizen eines Ultraschallwandlers (10), bei dem ein Innenraum (16) des Ultraschallwandlers (10) zusammen mit einem Membranelement (12) durch Wärmeabstrahlung eines Bauteils erwärmt wird, wobei die Temperatur des Membranelements (12) auf eine Temperatur oberhalb des Gefrierpunkts erhöht wird,
**dadurch gekennzeichnet,**
**dass** die Erwärmung durch ein Piezoelement (15) erzielt wird, das in einem ersten Betriebsmodus dazu dient, einen Sende- und/oder Empfangsbetrieb des Ultraschallwandlers (10) auszuführen und in einem zweiten Betriebsmodus derart betrieben wird, dass das Piezoelement (15) eine gegenüber dem ersten Betriebsmodus erhöhte elektrische Verlustleistung aufweist, dass der zweite Betriebsmodus ein Aussenden von Sendepulsen des Piezoelements (15) mit einer Frequenz außerhalb der Resonanzfrequenz des Membranelements (12) und/oder des Piezoelements (15) umfasst, und dass der zweite Betriebsmodus zusätzlich einen Betrieb eines Rechnerkerns eines Mikrocontrollers im Innenraum (16) des Ultraschallwandlers (10) umfasst, der zu einer erhöhten Auslastung des Rechnerkerns führt und somit zur Erwärmung des Innenraumes (16) des Ultraschallwandlers (10) beiträgt, und dass der zweite Betriebsmodus in Abhängigkeit des Ergebnisses einer Impedanzmessung des Membranelements (12) gesteuert wird.

2. Verfahren nach Anspruch 1,
**dadurch gekennzeichnet,**
**dass** der zweite Betriebsmodus ein Aussenden von gegenüber dem ersten Betriebsmodus eine höhere Frequenz aufweisenden Sendepulsen des Piezoelements (15) umfasst.

3. Verfahren nach Anspruch 1,
**dadurch gekennzeichnet,**
**dass** zur Festlegung der Frequenz der Sendepulse vorab die Impedanzmessung an dem Membranelement (12) durchgeführt wird.

4. Verfahren nach einem der Ansprüche 1 bis 3,
**dadurch gekennzeichnet,**
**dass** die Bauteiltemperatur des an dem zweiten Betriebsmodus beteiligten Mikrocontrollers überwacht wird und der zweite Betriebsmodus nur unterhalb einer Temperaturschwelle ausgeführt wird.

5. Verfahren nach einem der Ansprüche 1 bis 4,
**dadurch gekennzeichnet,**
**dass** der zweite Betriebsmodus mit dem ersten Betriebsmodus abwechselt.

6. Ultraschallwandler (10), mit einem Membranelement (12), das mittels eines Piezoelements (15) zu Schwingungen anregbar ist, und mit elektronischen Bauteilen (21, 22) wie einem einen Rechnerkern aufweisenden Mikrocontroller und einer Sendeendstufe zur Ansteuerung des Piezoelements (15), wobei die elektronischen Bauteile (21, 22) dazu ausgebildet sind, den Ultraschallwandler (10) nach wenigstens einem der Ansprüche 1 bis 5 zu betreiben.

7. Ultraschallwandler nach Anspruch 6,
**dadurch gekennzeichnet,**
**dass** Mittel zur Erfassung der Bauteiletemperatur der elektronischen Bauteile (21, 22) vorgesehen sind.

## Claims

1. Method for heating an ultrasonic transducer (10), in which an interior (16) of the ultrasonic transducer (10), together with a diaphragm element (12), is heated by the emission of heat from a component, wherein the temperature of the diaphragm element (12) is increased to a temperature above freezing point,
**characterized**
**in that** the heating is achieved by a piezo element (15) that, in a first mode of operation, is used to carry out a transmission and/or reception mode of the ultrasonic transducer (10) and, in a second mode of operation, is operated such that the piezo element (15) has an increased electrical power loss in comparison with the first mode of operation, in that the second mode of operation comprises transmission of transmission pulses of the piezo element (15) at a frequency outside the resonant frequency of the diaphragm element (12) and/or of the piezo element (15), and in that the second mode of operation additionally comprises operation of a computer core of a microcontroller in the interior (16) of the ultrasonic transducer (10) that leads to an increased workload for the computer core and hence contributes to the heating of the interior (16) of the ultrasonic transducer (10), and in that the second mode of operation is controlled on the basis of the result of an impedance measurement on the diaphragm element (12).

2. Method according to Claim 1,
**characterized**
**in that** the second mode of operation comprises transmission of transmission pulses of the piezo element (15) that have a higher frequency in comparison with the first mode of operation.

3. Method according to Claim 1,
**characterized**
**in that** the frequency of the transmission pulses is stipulated by performing the impedance measurement on the diaphragm element (12) beforehand.

4. Method according to one of Claims 1 to 3, **characterized**
**in that** the component temperature of the microcontroller involved in the second mode of operation is monitored and the second mode of operation is carried out only below a temperature threshold.

5. Method according to one of Claims 1 to 4, **characterized**
**in that** the second mode of operation alternates with the first mode of operation.

6. Ultrasonic transducer (10), having a diaphragm element (12) that is excitable by means of a piezo element (15) to produce oscillations and having electronic components (21, 22) such as a microcontroller, having a computer core, and a transmission output stage for actuating the piezo element (15), wherein the electronic components (21, 22) are designed to operate the ultrasonic transducer (10) according to at least one of Claims 1 to 5.

7. Ultrasonic transducer according to Claim 6, **characterized**
**in that** there is provision for means for detecting the component temperature of the electronic components (21, 22) .

## Revendications

1. Procédé pour chauffer un transducteur ultrasonore (10), dans lequel un espace intérieur (16) du transducteur ultrasonore (10) est chauffé conjointement avec un élément de membrane (12) par dissipation thermique d'un composant, la température de l'élément de membrane (12) étant augmentée à une température supérieure au point de congélation,
**caractérisé en ce que** le réchauffement est obtenu par un élément piézoélectrique (15) qui, dans un premier mode de fonctionnement, sert à exécuter un fonctionnement d'émission et/ou de réception du transducteur ultrasonore (10) et qui, dans un deuxième mode de fonctionnement, est actionné de telle sorte que l'élément piézoélectrique (15) présente une puissance dissipée électrique augmentée par rapport au premier mode de fonctionnement, **en ce que** le deuxième mode de fonctionnement comprend l'émission d'impulsions d'émission de l'élément piézoélectrique (15) à une fréquence en dehors de la fréquence de résonance de l'élément de membrane (12) et/ou de l'élément piézoélectrique (15), et **en ce que** le deuxième mode de fonctionnement comprend en outre un fonctionnement d'un calculateur central d'un microcontrôleur dans l'espace intérieur (16) du transducteur ultrasonore (10) qui entraîne une charge augmentée du calculateur central et contribue donc au réchauffement de l'espace intérieur (16) du transducteur ultrasonore (10), et **en ce que** le deuxième mode de fonctionnement est commandé en fonction du résultat d'une mesure d'impédance de l'élément de membrane (12).

2. Procédé selon la revendication 1, **caractérisé en ce que** le deuxième mode de fonctionnement comprend l'émission d'impulsions d'émission de l'élément piézoélectrique (15) présentant une fréquence supérieure par rapport au premier mode de fonctionnement.

3. Procédé selon la revendication 1, **caractérisé en ce que** pour établir la fréquence des impulsions d'émission, la mesure d'impédance est préalablement effectuée sur l'élément de membrane (12).

4. Procédé selon l'une quelconque des revendications 1 à 3, **caractérisé en ce que** la température de composant du microcontrôleur impliqué dans le deuxième mode de fonctionnement est surveillée et le deuxième mode de fonctionnement n'est exécuté qu'en-dessous d'un seuil de température.

5. Procédé selon l'une quelconque des revendications 1 à 4, **caractérisé en ce que** le deuxième mode de fonctionnement alterne avec le premier mode de fonctionnement.

6. Transducteur ultrasonore (10), comprenant un élément de membrane (12) qui peut être mis en vibration au moyen d'un élément piézoélectrique (15), et comprenant des composants électroniques (21, 22), comme un microcontrôleur présentant un calculateur central et un étage final d'émission pour piloter l'élément piézoélectrique (15), les composants électroniques (21, 22) étant réalisés pour faire fonctionner le transducteur ultrasonore (10) selon au moins l'une des revendications 1 à 5.

7. Transducteur ultrasonore selon la revendication 6, **caractérisé en ce que** des moyens de détection de la température de composant des composants électroniques (21, 22) sont prévus.
